# EUROPEAN PATENT SPECIFICATION

(11) **EP 3 197 110 B1**
(45) Date of publication and mention of the grant of the patent: **23.09.2020**
(21) Application number: 15758045.7
(22) Date of filing: 22.01.2015
(51) Int. Cl.: H04L 12/911, H04L 12/815, H04L 12/863, H04L 12/851, H04L 12/64, H04L 12/819

(54) **BANDWIDTH ALLOCATION METHOD AND APPARATUS**
BANDBREITENZUWEISUNGSVERFAHREN UND VORRICHTUNG
PROCÉDÉ ET APPAREIL D'ATTRIBUTION DE BANDE PASSANTE

(30) Priority: 17.09.2014 CN 201410475540
(43) Date of publication of application: 26.07.2017
(73) Proprietor: ZTE Corporation, Shenzhen, Guangdong 518057 (CN)
(72) Inventor: SHAO, Changchun, Shenzhen Guangdong 518057 (CN)
(74) Representative: Novagraaf Technologies
(86) International application number: PCT/CN2015/071331
(87) International publication number: WO 2015/131692

(56) References cited:
- CN-A- 101 232 449
- CN-A- 102 104 874
- CN-A- 102 932 274
- CN-A- 104 038 442
- VISOOTTIVISETH V ET AL: "Adaptive bandwidth allocation for per-station fairness on wireless access router", COMMUNICATIONS AND INFORMATION TECHNOLOGIES (ISCIT), 2010 INTERNATIONAL SYMPOSIUM ON, IEEE, PISCATAWAY, NJ, USA, 26 October 2010 (2010-10-26), pages 238-243, XP031832969, ISBN: 978-1-4244-7007-5

## Description

### Technical Field

The present disclosure relates to the field of communications, and in particular to a bandwidth allocation method and apparatus.

### Background

At present, a plurality of devices may be linked to one router to share network bandwidths. If one device uses, for example, Thunder Download to pre-empt the entire bandwidth, other devices are unlikely to pre-empt the bandwidth, and thus the other devices cannot use network service normally.

Some Peer to Peer (P2P) download software, such as Thunder download software, Bit Torrent (BT) download software, Funshion download software, Tudou online video and Youku online video, use a special download mechanism. This special download mechanism enables the software using this mechanism to quickly pre-empt a large bandwidth during downloading until the software pre-empts the entire bandwidth. When a multi-thread mode is activated, all bandwidths may be pre-empted during downloading of a plurality of movies, thereby preventing other devices from pre-empting the bandwidth and influencing the normal use of network services, for example, the other devices even cannot browse a web page.

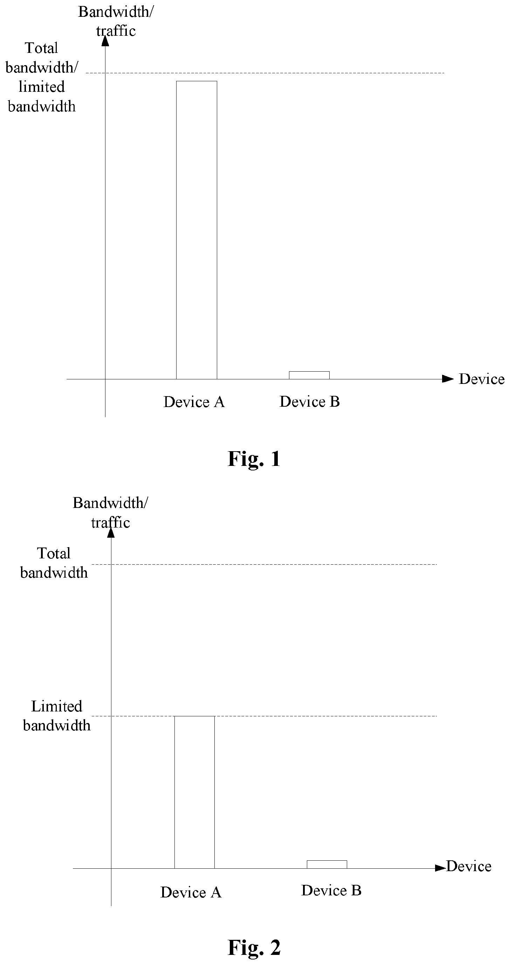

In the related art, even if a total bandwidth may be equally allocated to each device by using a Hierarchical Token Bucket (HTB) algorithm, this problem cannot be well solved. Analysis may be done considering two situations described below. In the first situation, the bandwidth is equally allocated and is allowed to be borrowed. Under this situation, after a certain device pre-empts the entire bandwidth, other devices cannot pre-empt the bandwidth since the device pre-empting the entire bandwidth is not obligated to repay bandwidths to the other devices. Fig. 1 is a first diagram of bandwidth allocation to two devices based on an HTB algorithm according to the related art. As shown in Fig. 1, device A in Fig. 1 pre-empts a majority of the total bandwidth, and device B cannot pre-empt more bandwidths. In the second situation, the bandwidth is equally allocated but is not allowed to be borrowed. Under this situation, although the situation that some devices can not pre-empt bandwidths does not exist, waste of the entire bandwidth is serious when some devices use small bandwidth. Fig. 2 is a second diagram of bandwidth allocation to two devices based on an existing HTB algorithm. As shown in Fig. 2, device A can only pre-empt part of the bandwidth at most, and device B pre-empts small bandwidth, thus causing waste of remaining bandwidth resources. It can be concluded from the aforementioned analysis that multiple devices cannot equitably use the total bandwidth due to inherent characteristics of the HTB algorithm.

Any effective solution has not been proposed yet at present for the problem where a bandwidth allocation method is not proper.

Scientific publication "Adaptive bandwidth allocation for per-station fairness on wireless access router" (XP031832969) discloses an adaptive bandwidth allocation mechanism to provide per-station fairness and a method to prevent domination of uplink flow which affects per-station fairness. However, the above mentioned problem still remains unsolved.

### Summary

The present invention is defined by the independent claims, to which reference should now be made. Specific embodiments are defined by the dependent claims. Some embodiments of the present disclosure provide a bandwidth allocation method and apparatus, so as to solve the technical problem where a bandwidth allocation method is not proper.

An embodiment of the present disclosure provides a bandwidth allocation method, which may include the following acts. An uplink/downlink total bandwidth of a router may be divided into an uplink/downlink parent-class bandwidth and an uplink/downlink reserved bandwidth according to a preset allocation ratio. Bandwidth traffic of each device linked to the router may be monitored. In this act, each device having bandwidth traffic exceeding a preset threshold may be classified as a first-class device, and each device having bandwidth traffic not exceeding the preset threshold may be classified as a second-class device. The uplink/downlink parent-class bandwidth and the uplink/downlink reserved bandwidth may be allocated to first-class devices and second-class devices respectively according to a monitoring result.

In an exemplary embodiment, a situation that the bandwidth traffic exceeds the preset threshold may include one of the following four situations. A first situation is that uplink bandwidth traffic of each device exceeds an uplink preset threshold. A second situation is that downlink bandwidth traffic of each device exceeds a downlink preset threshold. A third situation is that uplink bandwidth traffic of each device exceeds an uplink preset threshold, and downlink bandwidth traffic of each device exceeds a downlink preset threshold. A fourth situation is that uplink bandwidth traffic of each device exceeds an uplink preset threshold, or downlink bandwidth traffic of each device exceeds a downlink preset threshold.

In an exemplary embodiment, the act that the uplink/downlink parent-class bandwidth and the uplink/downlink reserved bandwidth are allocated to the first-class devices and the second-class devices respectively according to the monitoring result may include the following acts. The uplink/downlink parent-class bandwidth may be allocated to the first-class devices. A remaining bandwidth may be allocated to the second-class devices. The remaining bandwidth is equal to a sum of the uplink/downlink reserved bandwidth and a value obtained by subtracting a bandwidth used by the first-class devices from the uplink/downlink parent-class bandwidth.

In an exemplary embodiment, the uplink preset threshold may be less than the uplink reserved bandwidth, and/or the downlink preset threshold may be less than the downlink reserved bandwidth.

In an exemplary embodiment, the uplink/downlink parent-class bandwidth may be allocated to the first-class devices in at least one of the following modes: average allocation, allocation in a preset proportion, and priority-based allocation.

An embodiment of the present disclosure provides a bandwidth allocation apparatus, which may include a bandwidth division module, a traffic monitoring module and a bandwidth allocation module. The bandwidth division module is arranged to divide an uplink/downlink total bandwidth of a router into an uplink/downlink parent-class bandwidth and an uplink/downlink reserved bandwidth according to a preset allocation ratio. The traffic monitoring module is arranged to monitor bandwidth traffic of each device linked to the router. Each device having bandwidth traffic exceeding a preset threshold may be classified as a first-class device, and each device having bandwidth traffic not exceeding the preset threshold may be classified as a second-class device. The bandwidth allocation module is arranged to allocate the uplink/downlink parent-class bandwidth and the uplink/downlink reserved bandwidth to first-class devices and second-class devices respectively according to a monitoring result.

In an exemplary embodiment, a situation that the bandwidth traffic exceeds the preset threshold may include one of the following four situations. A first situation is that uplink bandwidth traffic of each device exceeds an uplink preset threshold. A second situation is that downlink bandwidth traffic of each device exceeds a downlink preset threshold. A third situation is that uplink bandwidth traffic of each device exceeds an uplink preset threshold, and downlink bandwidth traffic of each device exceeds a downlink preset threshold. A fourth situation is that uplink bandwidth traffic of each device exceeds an uplink preset threshold, or downlink bandwidth traffic of each device exceeds a downlink preset threshold.

In an exemplary embodiment, the bandwidth allocation module may include a first allocation unit and a second allocation unit. The first allocation unit is arranged to allocate the uplink/downlink parent-class bandwidth to the first-class devices. The second allocation unit is arranged to allocate a remaining bandwidth to the second-class devices. The remaining bandwidth is equal to a sum of the uplink/downlink reserved bandwidth and a value obtained by subtracting a bandwidth used by the first-class devices from the uplink/downlink parent-class bandwidth.

In an exemplary embodiment, the uplink preset threshold may be less than the uplink reserved bandwidth, and/or the downlink preset threshold may be less than the downlink reserved bandwidth.

In an exemplary embodiment, the bandwidth allocation module may be arranged to allocate the uplink/downlink parent-class bandwidth to the first-class devices in at least one of the following modes: average allocation, allocation in a preset proportion, and priority-based allocation.

An embodiment of the present disclosure provides a computer program. Another embodiment of the present disclosure provides a carrier for carrying a computer program. The computer program may include program instructions which, when executed by a routing device, cause the routing device to implement the aforementioned bandwidth allocation method.

The technical solution provided by the embodiments of the present disclosure has the following beneficial effects.

The technical solution uses a bandwidth control function already present in an HTB algorithm and adopts mechanisms of reserving a bandwidth in a total bandwidth, setting a threshold and dynamically configuring the device bandwidth. By virtue of the technical solution, all users are able to equally pre-empt and share bandwidths in real time under the premise that less of a total bandwidth is wasted, and the objective of equitable sharing of the bandwidth can be achieved, thereby enhancing the user experience of enjoying network service.

### Brief Description of the Drawings

Fig. 1 is a first diagram of bandwidth allocation to two devices based on an HTB algorithm according to the related art;
Fig. 2 is a second diagram of bandwidth allocation to two devices based on an HTB algorithm according to the related art;
Fig. 3 is a flowchart of a bandwidth allocation method according to an embodiment of the present disclosure;
Fig. 4 is a first diagram of bandwidth allocation according to an embodiment of the present disclosure;
Fig. 5 is a second diagram of bandwidth allocation according to an embodiment of the present disclosure;
Fig. 6 is a third diagram of bandwidth allocation according to an embodiment of the present disclosure;
Fig. 7 is a fourth diagram of bandwidth allocation according to an embodiment of the present disclosure; and
Fig. 8 is a structural diagram of a bandwidth allocation apparatus according to an embodiment of the present disclosure.

### Detailed Description of the Embodiments

In order to solve the problem in the conventional art where a bandwidth allocation method is not proper, the embodiments of the present disclosure provide a bandwidth allocation method and apparatus.

The embodiments of the present disclosure will be illustrated hereinbelow in conjunction with the drawings in detail. It is important to note that the embodiments in the present application and the characteristics in the embodiments may be combined under the condition of no conflicts. In addition, although a logic sequence is shown in the flowchart, the shown or described acts may be executed in a sequence different from the sequence here under certain conditions. It shall be understood that specific embodiments described herein are merely used to explain the present disclosure and do not limit the present disclosure.

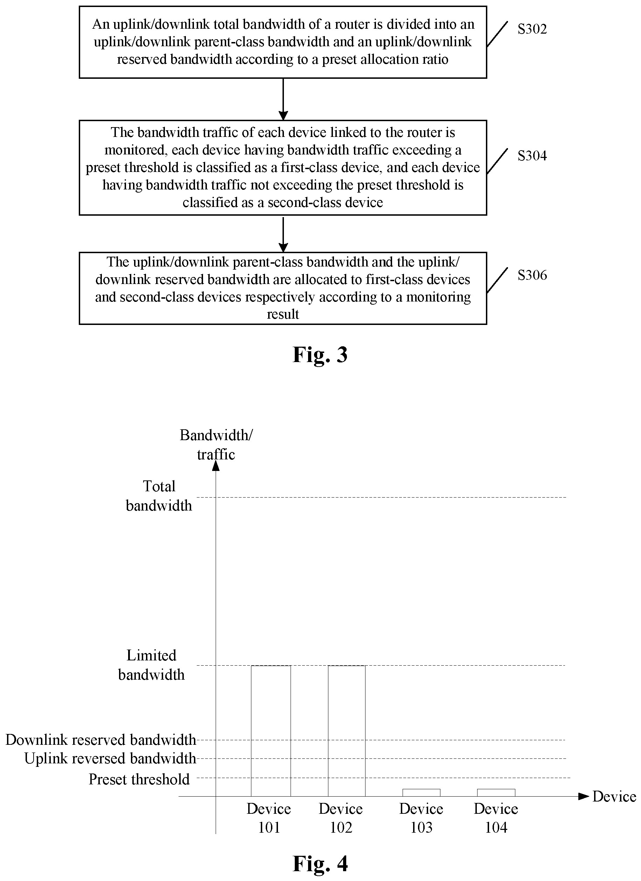

An embodiment provides a bandwidth allocation method which may be implemented at a router side. Fig. 3 is a flowchart of a bandwidth allocation method according to the embodiment of the present disclosure. As shown in Fig. 3, the method may include the following acts (S302 to S306).

At S302, an uplink/downlink total bandwidth of a router may be divided into an uplink/downlink parent-class bandwidth and an uplink/downlink reserved bandwidth according to a preset allocation ratio. The preset allocation ratio may be determined according to a practical situation. As an example only, the uplink/downlink parent-class bandwidth accounts for 80%, and the uplink/downlink reserved bandwidth accounts for 20%.

At S304, the bandwidth traffic of each device linked to the router may be monitored. Each device having bandwidth traffic exceeding a preset threshold may be classified as a first-class device, and each device having bandwidth traffic not exceeding the preset threshold may be classified as a second-class device. The value of the preset threshold may be set according to a practical operation situation.

In the present embodiment, taking the fact that a router has an uplink channel and a downlink channel into consideration, a situation that the bandwidth traffic exceeds the preset threshold may include one of the following four situations.
(1) Uplink bandwidth traffic of each device exceeds an uplink preset threshold.
(2) Downlink bandwidth traffic of each device exceeds a downlink preset threshold.
(3) Uplink bandwidth traffic of each device exceeds an uplink preset threshold, and downlink bandwidth traffic of each device exceeds a downlink preset threshold.
(4) Uplink bandwidth traffic of each device exceeds an uplink preset threshold, or downlink bandwidth traffic of each device exceeds a downlink preset threshold.

The uplink preset threshold may be less than the uplink reserved bandwidth, and/or the downlink preset threshold may be less than the downlink reserved bandwidth.

At S306, the uplink/downlink parent-class bandwidth and the uplink/downlink reserved bandwidth are allocated to first-class devices and second-class devices respectively according to a monitoring result.

In this act, the bandwidth allocation method may be implemented in the following manner. The uplink/downlink parent-class bandwidth may be allocated to the first-class devices. A remaining bandwidth may be allocated to the second-class devices. The remaining bandwidth is equal to a sum of the uplink/downlink reserved bandwidth and a value obtained by subtracting a bandwidth used by the first-class devices from the uplink/downlink parent-class bandwidth. In a practical operation process, a bandwidth used by the first-class devices may not be equal to the uplink/downlink parent-class bandwidth allocated to the first-class devices, that is, the first-class device may not use the entirety of the uplink/downlink parent-class bandwidth allocated to the first-class device.

The present embodiment uses a bandwidth control function already present in an HTB algorithm and adopts mechanisms of reserving a bandwidth in a total bandwidth, setting a threshold and dynamically configuring the device bandwidth. By virtue of the technical solution, all users are able to equally pre-empt and share bandwidths in real time under the premise that less of a total bandwidth is wasted, and the objective of equitable sharing of the bandwidth can be achieved, thereby enhancing the user experience of enjoying network service.

The bandwidth may be allocated to the first-class device in at least one of the following modes: average allocation, allocation in a preset proportion, and priority-based allocation. All devices exceeding the preset threshold share the parent-class bandwidth, and are not allowed to re-borrow bandwidth other than the parent-class bandwidth in the total bandwidth.

In the present embodiment, part of the total bandwidth is reserved as a burst bandwidth (i.e., reserved bandwidth). The remaining bandwidth (i.e., parent-class bandwidth) is dynamically and equally allocated to the linked devices. All devices are allowed to pre-empt the bandwidth in a burst manner during initialization. In the present embodiment, the parent-class bandwidth is defined as the remaining bandwidth obtained by subtracting the reserved bandwidth from the total bandwidth. In an HTB algorithm, a child class may borrow bandwidth from the parent-class, and is not obligated to repay the bandwidth, thereby leading to 'starvation' of other child classes easily. According to the technical solution provided by the embodiments of the present disclosure, part of the total bandwidth is reserved, and child classes having pre-empted all the remaining bandwidth in the total bandwidth are not allowed to borrow the reserved bandwidth, so other child classes may burst via the reserved bandwidth. In the technical solution provided by the embodiments of the present disclosure, a preset threshold value is provided. When the burst traffic of a certain child classes exceeds the preset threshold, this child classes may share the parent-class bandwidth with all of the other child classes having the burst traffic exceeding the threshold value.

The total bandwidth may include an uplink total bandwidth and a downlink total bandwidth.

The reserved bandwidth may include an uplink reserved bandwidth and a downlink reserved bandwidth.

The parent-class bandwidth may include an uplink parent-class bandwidth and a downlink parent-class bandwidth.

Each device corresponds to one child class, and the bandwidth is allocated to each child class based on a device Media Access Control (MAC).

The reserved bandwidth may be reserved according to a ratio, e.g., a percentage, of the total bandwidth. Generally, the reserved bandwidth is required to ensure that, for example, a web page may be normally browsed under a non pre-empting condition. That is, the reversed bandwidth is generally a non-zero value. The size of the reserved bandwidth may be limited in conjunction with an absolute value of the total bandwidth. That is, a minimum value and a maximum value may be limited on the basis of the percentage of the total bandwidth. The reserved bandwidth may include an uplink reserved bandwidth and a downlink reserved bandwidth. When there is only one device at present, the reserved bandwidth may be zero, that is, no bandwidth is reserved, and the device may use the entire bandwidth. The reserved bandwidth is set to be as small as possible on the basis of ensuring that the bandwidth can be successfully pre-empted.

The preset threshold is a minimum traffic value for sharing the parent-class bandwidth. A device with traffic exceeding the minimum value is allowed to equitably share the parent-class bandwidth. The preset threshold may be divided into an uplink bandwidth preset threshold and a downlink bandwidth preset threshold. The preset threshold is generally smaller than the reserved bandwidth.

A smaller preset threshold is easier to trigger dynamic equal bandwidth allocation, but it is easy to cause bandwidth waste due to frequent equal bandwidth allocation, especially when some devices only use smaller traffic. The bandwidth pre-empting sensitivity is associated with the preset threshold. The sensitivity is higher while the preset threshold is lower, and the sensitivity is lower while the preset threshold is higher.

In the present embodiment, as an optional implementation, a timer may be arranged to detect the traffic of each device in real time. The bandwidth pre-empting sensitivity is associated with a time interval of the timer. The sensitivity is higher while the time interval is smaller, and the sensitivity is lower while the time interval is larger. It is not true that the smaller the time interval is, the better the performance is. A smaller time interval occupies a longer time of a Central Processing Unit (CPU), thus influencing running of other services on a system. The time interval is suggested to be set to achieve the best user experience (that is, the sensitivity is higher) on the basis of no influence on the system performance.

When it is detected that the device traffic exceeding the preset threshold is lower than the preset threshold after a period of time, the device no longer shares the parent-class bandwidth with other devices. For the device, it is only guaranteed that the minimum bandwidth is an average bandwidth after the total bandwidth is equally allocated to all the users, and the device is allowed to borrow the total bandwidth. When the router only has one online device, the device may use the entire total bandwidth.

A specific implementation mode of this embodiment will be illustrated hereinbelow.

The implementation solution is that: during initialization, 20% of the total bandwidth is reserved, and the remaining 80% of the total bandwidth is equally allocated to all linked devices. If the reserved 20% of the total bandwidth exceeds 1 Million bits per second (Mbps), only 1Mbps is reserved. The remaining 80% of the total bandwidth is called as the parent-class bandwidth. The timer is started to be capable of detecting uplink/downlink network traffic at an interval of 1s. If the uplink or downlink traffic of N devices exceeds a certain preset threshold, the parent-class bandwidth is equally allocated to the N devices (not allowed to borrow bandwidth), and other devices are allowed to burst to the parent-class bandwidth on the basis of equal allocation of the parent-class bandwidth. A device of which the uplink/downlink traffic does not exceed the preset threshold may use the reserved bandwidth in the total bandwidth to pre-empt the bandwidth in a burst manner until the device equally shares the bandwidth with other devices exceeding the preset threshold.

If the downlink total bandwidth of a network environment is 10Mbps and the uplink total bandwidth is 1Mbps, then according to the aforementioned implementation solution, the downlink reserved bandwidth is 1Mbps, the downlink parent-class bandwidth is 9Mbps, the uplink reserved bandwidth is 200Kbps, and the uplink parent-class bandwidth is 800Kbps. If the uplink bandwidth preset threshold and the downlink bandwidth preset threshold are both 50Kbps, the type of a dynamic bandwidth allocation triggering mechanism is that the traffic exceeds the uplink preset threshold or exceeds the downlink preset threshold.

A. When only one device is linked to the router, the device is allowed to occupy all bandwidths, and a Traffic Control (TC) rule may be configured as follows.
tc class add dev ifb0 parent 1:2 classid 1:101 htb rate 10000kbit ceil 10000kbit prio 0
tc class add dev eth0 parent 1:2 classid 1:101 htb rate 1000kbit ceil 1000kbit prio 0
where ifb0 is a downlink convergence interface device, and eth0 is an uplink convergence interface device.

B. When four devices are linked to the router, when traffic of two of the devices (device 101 and device 102) exceeds a preset threshold, a TC rule may be configured as follows.

Downlink:
tc class add dev ifb0 parent 1:2 classid 1:101 htb rate 4500kbit ceil 4500kbit prio 0
tc class add dev ifb0 parent 1:2 classid 1:102 htb rate 4500kbit ceil 4500kbit prio 0
tc class add dev ifb0 parent 1:2 classid 1:103 htb rate 2500kbit ceil 10000kbit prio 0
tc class add dev ifb0 parent 1:2 classid 1:104 htb rate 2500kbit ceil 10000kbit prio 0

Available bandwidth resources of the aforementioned device 103 and device 104 may be limited to be 2500kbit to 10000kbit, where 2500kbit is obtained by dividing a downlink total bandwidth 10Mbps by 4 (total number of devices).

Uplink:
tc class add dev eth0 parent 1:2 classid 1:101 htb rate 400kbit ceil 400kbit prio 0
tc class add dev eth0 parent 1:2 classid 1:102 htb rate 400kbit ceil 400kbit prio 0
tc class add dev eth0 parent 1:2 classid 1:103 htb rate 250kbit ceil 1000kbit prio 0
tc class add dev eth0 parent 1:2 classid 1:104 htb rate 250kbit ceil 1000kbit prio 0

Available bandwidth resources of the aforementioned device 103 and device 104 may be limited to be 250kbit to 1000kbit, where 250kbit is obtained by dividing a downlink total bandwidth 1Mbps by 4 (total number of devices).

When the traffic of device 101 or 102 exceeds 50Kbps, the two devices may use a downlink parent-class bandwidth 4.5Mbps, and cannot pre-empt more bandwidths, referring to a first diagram of bandwidth allocation as shown in Fig. 4.

At this time, device 103 or 104 may pre-empt the bandwidth by borrowing downlink reserved bandwidth 1Mbps of downlink total bandwidth+(4.5Mbps-bandwidth used by device)*2 (note: two devices 101 and 102). Once the traffic of device 103 or 104 exceeds the preset threshold, device 103 or 104 may equally share the downlink parent-class bandwidth 9Mbps with device 101 and 102. The bandwidth used by the device may not be equal to 3Mbps or 2.25Mbps, that is, the downlink parent-class bandwidth allocated to device 103 or 104 may not be completely used by device 103 or 104.

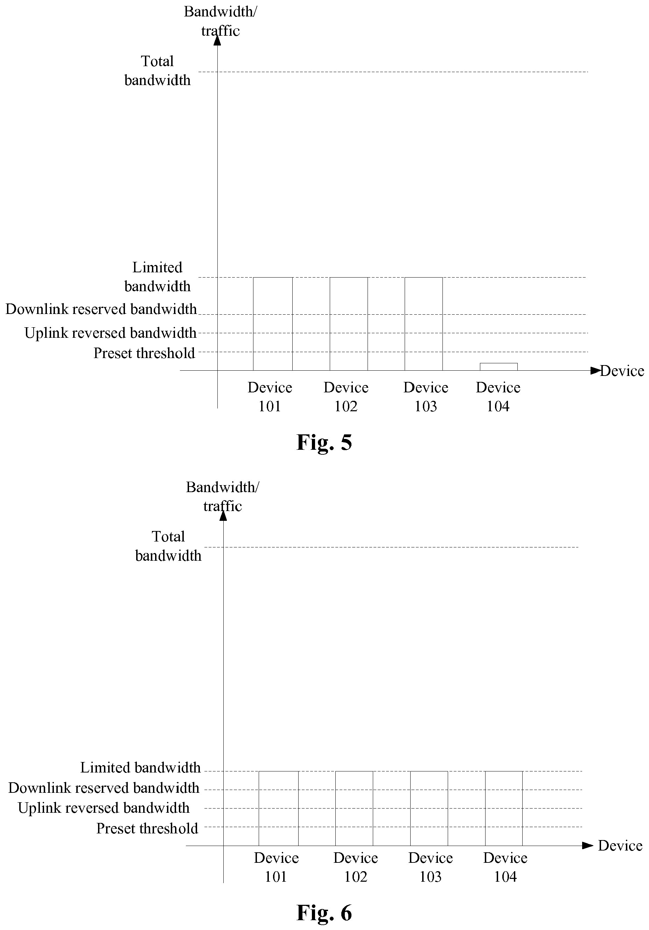

When the bandwidth traffic of device 103 exceeds the preset threshold, the bandwidth allocation is shown in a second diagram of bandwidth allocation in Fig. 5.

When the bandwidth traffic of device 104 also exceeds the preset threshold, the bandwidth allocation is shown in a third diagram of bandwidth allocation in Fig. 6.

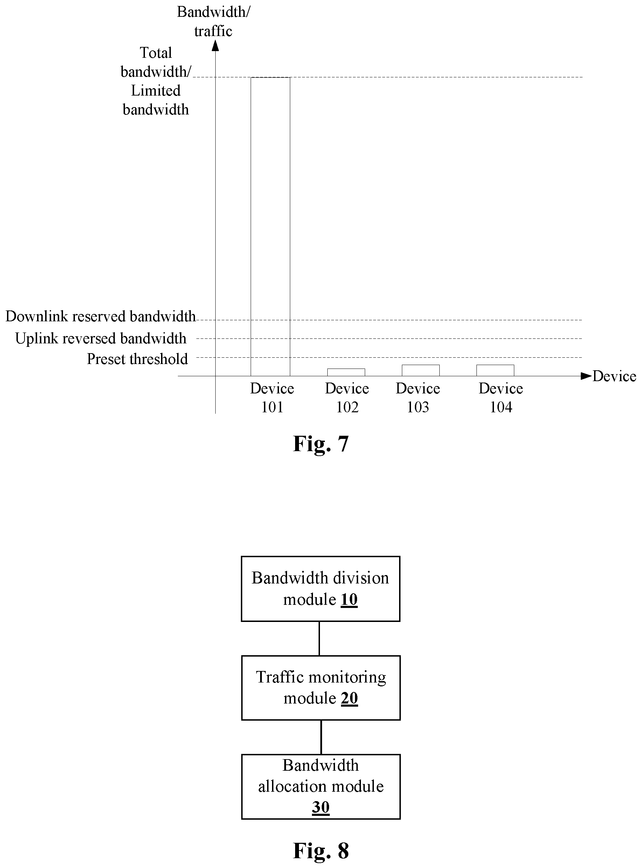

When the bandwidth traffic of device 102, 103 and 104 exceeds the preset threshold, the bandwidth allocation is shown in a fourth diagram of bandwidth allocation in Fig. 7.

In correspondence to the bandwidth allocation method introduced in the aforementioned embodiments, the present embodiment provides a bandwidth allocation apparatus. The apparatus may be arranged at a router side, and arranged to implement the aforementioned embodiment. The router may include a processor, a program memory and a data memory. Fig. 8 is a structural diagram of a bandwidth allocation apparatus according to an embodiment of the present disclosure. As shown in Fig. 8, the apparatus may include: a bandwidth division module 10, a traffic monitoring module 20 and a bandwidth allocation module 30. The structure will be introduced hereinbelow in detail.

The bandwidth division module 10 is arranged to divide an uplink/downlink total bandwidth of a router into an uplink/downlink parent-class bandwidth and an uplink/downlink reserved bandwidth according to a preset allocation ratio.

The traffic monitoring module 20 is connected to the bandwidth division module 10 and arranged to monitor bandwidth traffic of each device linked to the router. Each device having bandwidth traffic exceeding a preset threshold may be classified as a first-class device, and each device having bandwidth traffic not exceeding the preset threshold may be classified as a second-class device.

The bandwidth allocation module 30 is connected to the traffic monitoring module 20 and arranged to allocate the uplink/downlink parent-class bandwidth and the uplink/downlink reserved bandwidth to first-class devices and second-class devices respectively according to a monitoring result.

The present embodiment uses a bandwidth control function already present in an HTB algorithm and adopts mechanisms of reserving a bandwidth in a total bandwidth, setting a threshold and dynamically configuring the device bandwidth. By virtue of the technical solution, all users are able to equally pre-empt and share bandwidths in real time under the premise that less of a total bandwidth is wasted, and the objective of equitable sharing of the bandwidth can be achieved, thereby enhancing the user experience of enjoying network service.

A situation that the bandwidth traffic exceeds the preset threshold may include one of the following four situations. A first situation is that uplink bandwidth traffic of each device exceeds an uplink preset threshold. A second situation is that downlink bandwidth traffic of each device exceeds a downlink preset threshold. A third situation is that uplink bandwidth traffic of each device exceeds an uplink preset threshold, and downlink bandwidth traffic of each device exceeds a downlink preset threshold. A fourth situation is that uplink bandwidth traffic of each device exceeds an uplink preset threshold, or downlink bandwidth traffic of each device exceeds a downlink preset threshold.

In an exemplary embodiment, the bandwidth allocation module 30 may include a first allocation unit and a second allocation unit. The first allocation unit is arranged to allocate the uplink/downlink parent-class bandwidth to the first-class devices. The second allocation unit is arranged to allocate a remaining bandwidth to the second-class devices. The remaining bandwidth is equal to a sum of the uplink/downlink reserved bandwidth and a value obtained by subtracting a bandwidth used by the first-class devices from the uplink/downlink parent-class bandwidth.

In the present embodiment, the uplink preset threshold may be less than the uplink reserved bandwidth, and/or the downlink preset threshold may be less than the downlink reserved bandwidth.

In the present embodiment, the uplink/downlink parent-class bandwidth may be allocated to the first-class devices in at least one of the following modes: average allocation, allocation in a preset proportion, and priority-based allocation.

Some P2P download software, such as Thunder download software, BT download software, Funshion download software, Tudou online video and Youku online video, use a special download mechanism. This special download mechanism enables the software using this mechanism to quickly pre-empt a large bandwidth during downloading until the software pre-empts the entire bandwidth. When a multi-thread mode is activated, all bandwidths may be pre-empted during downloading of a plurality of movies, thereby preventing other devices from pre-empting the bandwidth and influencing the normal use of network services, for example, the other devices even cannot browse a web page. By means of the present disclosure, these pieces of software pre-empting the bandwidth cannot pre-empt all bandwidths, and other devices may pre-empt the bandwidth and equitably share the bandwidth.

Those of ordinary skill in the art may understand that all or some acts in the aforementioned method may be completed by instructing relevant hardware via a program, and the program may be stored in a computer-readable storage medium such as a read-only memory, a magnetic disk or an optical disc. Alternatively, all or some acts in the aforementioned embodiments may be implemented by using one or more integrated circuits. Correspondingly, each module/unit in the aforementioned embodiments may be implemented in a hardware form or may be implemented in a software function module form. The present disclosure is not limited to combination of any specific hardware and software.

Certainly, the present disclosure may also have various other embodiments. Those skilled in the art may make various corresponding variations and transformations according to the present disclosure without departing from the essence of the present disclosure, but these corresponding variations and transformations shall fall within the scope of protection of the claims of the present disclosure.

### Industrial Applicability

The technical solution provided in the embodiments of the present disclosure uses a bandwidth control function already present in an HTB algorithm and adopts mechanisms of reserving a bandwidth in a total bandwidth, setting a threshold and dynamically configuring the device bandwidth. By virtue of the technical solution, all users are able to equally pre-empt and share bandwidths in real time under the premise that less of a total bandwidth is wasted, and the objective of equitable sharing of the bandwidth can be achieved, thereby enhancing the user experience of enjoying network service.

## Claims

1. A bandwidth allocation method, using an Hierarchical Token Bucket, HTB, algorithm, the method comprising:
dividing (S302) an uplink total bandwidth of a router into an uplink parent-class bandwidth and an uplink reserved bandwidth according to a first preset allocation ratio, and dividing a downlink total bandwidth of a router into a downlink parent-class bandwidth and a downlink reserved bandwidth according to a second preset allocation ratio;
monitoring (S304) bandwidth traffic of each device linked to the router, wherein each device corresponds to one child-class and classifying a device having bandwidth traffic exceeding a preset threshold as a first-class device, and a device having bandwidth traffic not exceeding the preset threshold as a second-class device, wherein the preset threshold is a minimum traffic value for sharing the parent-class bandwidth; and
allocating (S306) the uplink and the downlink parent-class bandwidths and the uplink and downlink reserved bandwidths to first-class devices and second-class devices respectively according to the monitoring result obtained after the bandwidth traffic monitoring of each device;
wherein allocating (S306) the uplink and downlink parent-class bandwidths and the uplink and downlink reserved bandwidths to the first-class devices and the second-class devices respectively according to the monitoring results comprises: allocating the uplink and downlink parent-class bandwidths to the first-class devices; and allocating a remaining bandwidth to the second-class devices, wherein the remaining bandwidth is equal to a sum of the uplink reserved bandwidth, respectively of the downlink reserved bandwidth, and a value obtained by subtracting a bandwidth used by the first-class devices from the uplink parent-class bandwidth, respectively from the downlink parent-class bandwidth;
wherein the parent-class bandwidth is defined as the remaining bandwidth obtained by subtracting the reserved bandwidth from the total bandwidth, and the child classes having pre-empted all the remaining bandwidth in the total bandwidth are not allowed to borrow the reserved bandwidth.

2. The method as claimed in claim 1, wherein a situation that the bandwidth traffic exceeds the preset threshold comprises one of the following four situations:
uplink bandwidth traffic of each device exceeds an uplink preset threshold;
downlink bandwidth traffic of each device exceeds a downlink preset threshold;
uplink bandwidth traffic of each device exceeds an uplink preset threshold, and downlink bandwidth traffic of each device exceeds a downlink preset threshold;
uplink bandwidth traffic of each device exceeds an uplink preset threshold, or downlink bandwidth traffic of each device exceeds a downlink preset threshold.

3. The method as claimed in claim 2, wherein the uplink preset threshold is less than the uplink reserved bandwidth, and/or the downlink preset threshold is less than the downlink reserved bandwidth.

4. The method as claimed in claim 1, wherein the uplink/downlink parent-class bandwidth is allocated (S306) to the first-class devices in at least one of the following modes:
average allocation, allocation in a preset proportion, and priority-based allocation.

5. The method as claimed in any one of claims 1 to 4, wherein all devices having bandwidth traffic exceeding the preset threshold share the uplink/downlink parent-class bandwidth, and are not allowed to re-borrow bandwidth other than the uplink/downlink parent-class bandwidth in the uplink/downlink total bandwidth.

6. The method as claimed in any one of claims 1 to 4, wherein all devices are allowed to pre-empt the uplink/downlink total bandwidth in a burst manner during initialization.

7. The method as claimed in any one of claims 1 to 6, wherein monitoring (S304) bandwidth traffic of each device linked to the router comprises:
monitoring (S304) bandwidth traffic of each device linked to the router based on a timer.

8. A bandwidth allocation apparatus, using a Hierarchical Token Bucket, HTB, algorithm, the apparatus comprising:
a bandwidth division module (10), arranged to divide an uplink total bandwidth of a router into an uplink parent-class bandwidth and an uplink reserved bandwidth according to a first preset allocation ratio and a downlink total bandwidth of a router into a downlink parent-class bandwidth and a downlink reserved bandwidth according to a second preset allocation ratio;
a traffic monitoring module (20), arranged to monitor bandwidth traffic of each device linked to the router, wherein each device corresponds to one child-class and to classify a device having bandwidth traffic exceeding a preset threshold as a first-class device, and a device having bandwidth traffic not exceeding the preset threshold as a second-class device, wherein the preset threshold is a minimum traffic value for sharing the parent-class bandwidth; and
a bandwidth allocation module (30), arranged to allocate the uplink and downlink parent-class bandwidths and the uplink and downlink reserved bandwidths to first-class devices and second-class devices respectively according to the monitoring result obtained after the bandwidth traffic monitoring of each device
wherein the bandwidth allocation module (30) comprises: a first allocation unit, arranged to allocate the uplink and downlink parent-class bandwidths to the first-class devices; and a second allocation unit, arranged to allocate a remaining bandwidth to the second-class devices, wherein the remaining bandwidth is equal to a sum of the uplink reserved bandwidth, respectively of the downlink reserved bandwidth and a value obtained by subtracting a bandwidth used by the first-class devices from the uplink parent-class bandwidth, respectively from the downlink parent-class bandwidth;
wherein the parent-class bandwidth is defined as the remaining bandwidth obtained by subtracting the reserved bandwidth from the total bandwidth, and the child classes having pre-empted all the remaining bandwidth in the total bandwidth are not allowed to borrow the reserved bandwidth.

9. The apparatus as claimed in claim 8, wherein a situation that the bandwidth traffic exceeds the preset threshold comprises one of the following four situations:
uplink bandwidth traffic of each device exceeds an uplink preset threshold;
downlink bandwidth traffic of each device exceeds a downlink preset threshold;
uplink bandwidth traffic of each device exceeds an uplink preset threshold, and downlink bandwidth traffic of each device exceeds a downlink preset threshold;
uplink bandwidth traffic of each device exceeds an uplink preset threshold, or downlink bandwidth traffic of each device exceeds a downlink preset threshold.

10. The apparatus as claimed in claim 9, wherein the uplink preset threshold is less than the uplink reserved bandwidth, and/or the downlink preset threshold is less than the downlink reserved bandwidth.

11. The apparatus as claimed in claim 8, wherein the bandwidth allocation module (30) is arranged to allocate the uplink/downlink parent-class bandwidth to the first-class devices in at least one of the following modes: average allocation, allocation in a preset proportion, and priority-based allocation.

12. A computer program, comprising program instructions which, when executed by a routing device, cause the routing device to implement the bandwidth allocation method according to any one of claims 1 to 7.

13. A carrier, carrying the computer program as claimed in claim 12.

## Patentansprüche

1. Bandbreitenzuweisungsverfahren unter Verwendung eines Hierarchical Token Bucket-, HTB, Algorithmus, wobei das Verfahren umfasst:
Aufteilen (S302) einer Gesamt-Uplink-Bandbreite eines Routers in eine Uplink-Bandbreite übergeordneter Klasse und eine reservierte Uplink-Bandbreite gemäß einem ersten voreingestellten Zuweisungsverhältnis, und Aufteilen einer Gesamt-Downlink-Bandbreite eines Routers in eine Downlink-Bandbreite übergeordneter Klasse und eine reservierte Downlink-Bandbreite gemäß einem zweiten voreingestellten Zuweisungsverhältnis;
Überwachen (S304) von Bandbreitenverkehr jedes Geräts, das mit dem Router verbunden ist, wobei jedes Gerät einer untergeordneten Klasse entspricht, und Klassifizieren eines Geräts mit Bandbreitenverkehr, der eine voreingestellte Schwelle übersteigt, als ein Gerät erster Klasse, und eines Geräts mit Bandbreitenverkehr, der die voreingestellte Schwelle nicht übersteigt, als ein Gerät zweiter Klasse, wobei es sich bei der voreingestellten Schwelle um einen Mindest-Verkehrswert handelt, um sich die Bandbreite übergeordneter Klasse zu teilen; und
Zuweisen (S306) der Uplink- und der Downlink-Bandbreite übergeordneter Klasse und der reservierten Uplink- und Downlink-Bandbreite zu Geräten erster Klasse bzw. Geräten zweiter Klasse gemäß dem Überwachungsergebnis, das nach der Bandbreitenverkehrsüberwachung jedes Geräts erhalten wird;
wobei das Zuweisen (S306) der Uplink- und Downlink-Bandbreite übergeordneter Klasse und der reservierten Uplink- und Downlink-Bandbreite gemäß den Überwachungsergebnissen zu den Geräten erster Klasse bzw. den Geräten zweiter Klasse umfasst: Zuweisen der Uplink- und Downlink-Bandbreite übergeordneter Klasse zu den Geräten erster Klasse; und Zuweisen einer Restbandbreite zu den Geräten zweiter Klasse, wobei die Restbandbreite gleich einer Summe der reservierten Uplink-Bandbreite bzw. der reservierten Downlink-Bandbreite und eines Werts ist, der durch Subtrahieren einer von den Geräten erster Klasse verwendeten Bandbreite von der Uplink-Bandbreite übergeordneter Klasse bzw. von der Downlink-Bandbreite übergeordneter Klasse erhalten wird;
wobei die Bandbreite übergeordneter Klasse als die Restbandbreite definiert ist, die durch Subtrahieren der reservierten Bandbreite von der Gesamtbandbreite erhalten wird, und es den untergeordneten Klassen, die die ganze Restbandbreite in der Gesamtbandbreite im Voraus belegt haben, nicht gestattet ist, sich die reservierte Bandbreite zu leihen.

2. Verfahren nach Anspruch 1, wobei eine Situation, in der der Bandbreitenverkehr die voreingestellte Schwelle übersteigt, eine der folgenden vier Situationen umfasst:
Uplink-Bandbreitenverkehr jedes Geräts übersteigt eine voreingestellte Uplink-Schwelle;
Downlink-Bandbreitenverkehr jedes Geräts übersteigt eine voreingestellte Downlink-Schwelle;
Uplink-Bandbreitenverkehr jedes Geräts übersteigt eine voreingestellte Uplink-Schwelle, und Downlink-Bandbreitenverkehr jedes Geräts übersteigt eine voreingestellte Downlink-Schwelle;
Uplink-Bandbreitenverkehr jedes Geräts übersteigt eine voreingestellte Uplink-Schwelle, oder Downlink-Bandbreitenverkehr jedes Geräts übersteigt eine voreingestellte Downlink-Schwelle.

3. Verfahren nach Anspruch 2, wobei die voreingestellte Uplink-Schwelle kleiner ist als die reservierte Uplink-Bandbreite, und/oder die voreingestellte Downlink-Schwelle kleiner ist als die reservierte Downlink-Bandbreite.

4. Verfahren nach Anspruch 1, wobei die Uplink-/Downlink-Bandbreite übergeordneter Klasse den Geräten erster Klasse auf mindestens eine der folgenden Arten zugewiesen (S306) wird:
durchschnittliche Zuweisung, Zuweisung in einem voreingestellten Verhältnis, und prioritätsbasierte Zuweisung.

5. Verfahren nach einem der Ansprüche 1 bis 4, wobei sich alle Geräte mit Bandbreitenverkehr, der die voreingestellte Schwelle übersteigt, die Uplink-/Downlink-Bandbreite übergeordneter Klasse teilen und es denselben nicht gestattet ist, sich nochmals andere Bandbreite als die Uplink-/Downlink-Bandbreite übergeordneter Klasse in der Gesamt-Uplink-/Downlink-Bandbreite zu leihen.

6. Verfahren nach einem der Ansprüche 1 bis 4, wobei es allen Geräten gestattet ist, die Gesamt-Uplink-/Downlink-Bandbreite während des Initialisierens burstartig im Voraus zu belegen.

7. Verfahren nach einem der Ansprüche 1 bis 6, wobei das Überwachen (S304) von Bandbreitenverkehr jedes Geräts, das mit dem Router verbunden ist, umfasst:
Überwachen (S304) von Bandbreitenverkehr jedes Geräts, das mit dem Router verbunden ist, auf Basis eines Timers.

8. Bandbreitenzuweisungsvorrichtung, die einen Hierarchical Token Bucket-, HTB, Algorithmus verwendet, wobei die Vorrichtung umfasst:
ein Bandbreitenaufteilungsmodul (10), das dazu eingerichtet ist, eine Gesamt-Uplink-Bandbreite eines Routers gemäß einem ersten voreingestellten Zuweisungsverhältnis in eine Uplink-Bandbreite übergeordneter Klasse und eine reservierte Uplink-Bandbreite, und eine Gesamt-Downlink-Bandbreite eines Routers gemäß einem zweiten voreingestellten Zuweisungsverhältnis in eine Downlink-Bandbreite übergeordneter Klasse und eine reservierte Downlink-Bandbreite aufzuteilen;
ein Verkehrsüberwachungsmodul (20), das dazu eingerichtet ist, Bandbreitenverkehr jedes Geräts, das mit dem Router verbunden ist, wobei jedes Gerät einer untergeordneten Klasse entspricht, zu überwachen und ein Gerät mit Bandbreitenverkehr, der eine voreingestellte Schwelle übersteigt, als ein Gerät erster Klasse, und ein Gerät mit Bandbreitenverkehr, der die voreingestellte Schwelle nicht übersteigt, als ein Gerät zweiter Klasse zu klassifizieren, wobei es sich bei der voreingestellten Schwelle um einen Mindest-Verkehrswert handelt, um sich die Bandbreite übergeordneter Klasse zu teilen; und
ein Bandbreitenzuweisungsmodul (30), das dazu eingerichtet ist, die Uplink- und Downlink-Bandbreite übergeordneter Klasse und die reservierte Uplink- und Downlink-Bandbreite gemäß dem Überwachungsergebnis, das nach der Bandbreitenverkehrsüberwachung jedes Geräts erhalten wird, Geräten erster Klasse bzw. Geräten zweiter Klasse zuzuweisen,
wobei das Bandbreitenzuweisungsmodul (30) umfasst: eine erste Zuweisungseinheit, die dazu eingerichtet ist, den Geräten erster Klasse die Uplink- und Downlink-Bandbreite übergeordneter Klasse zuzuweisen; und eine zweite Zuweisungseinheit, die dazu eingerichtet ist, den Geräten zweiter Klasse eine Restbandbreite zuzuweisen, wobei die Restbandbreite gleich einer Summe der reservierten Uplink-Bandbreite bzw. der reservierten Downlink-Bandbreite und eines Werts ist, der durch Subtrahieren einer von den Geräten erster Klasse verwendeten Bandbreite von der Uplink-Bandbreite übergeordneter Klasse bzw. von der Downlink-Bandbreite übergeordneter Klasse erhalten wird;
wobei die Bandbreite übergeordneter Klasse als die Restbandbreite definiert ist, die durch Subtrahieren der reservierten Bandbreite von der Gesamtbandbreite erhalten wird, und es den untergeordneten Klassen, die die ganze Restbandbreite in der Gesamtbandbreite im Voraus belegt haben, nicht gestattet ist, sich die reservierte Bandbreite zu leihen.

9. Vorrichtung nach Anspruch 8, wobei eine Situation, in der der Bandbreitenverkehr die voreingestellte Schwelle übersteigt, eine der folgenden vier Situationen umfasst:
Uplink-Bandbreitenverkehr jedes Geräts übersteigt eine voreingestellte Uplink-Schwelle;
Downlink-Bandbreitenverkehr jedes Geräts übersteigt eine voreingestellte Downlink-Schwelle;
Uplink-Bandbreitenverkehr jedes Geräts übersteigt eine voreingestellte Uplink-Schwelle, und Downlink-Bandbreitenverkehr jedes Geräts übersteigt eine voreingestellte Downlink-Schwelle;
Uplink-Bandbreitenverkehr jedes Geräts übersteigt eine voreingestellte Uplink-Schwelle, oder Downlink-Bandbreitenverkehr jedes Geräts übersteigt eine voreingestellte Downlink-Schwelle.

10. Vorrichtung nach Anspruch 9, wobei die voreingestellte Uplink-Schwelle kleiner ist als die reservierte Uplink-Bandbreite, und/oder die voreingestellte Downlink-Schwelle kleiner ist als die reservierte Downlink-Bandbreite.

11. Vorrichtung nach Anspruch 8, wobei das Bandbreitenzuweisungsmodul (30) dazu eingerichtet ist, den Geräten erster Klasse die Uplink-/Downlink-Bandbreite übergeordneter Klasse auf mindestens eine der folgenden Arten zuzuweisen: durchschnittliche Zuweisung, Zuweisung in einem voreingestellten Verhältnis, und prioritätsbasierte Zuweisung.

12. Computerprogramm, das Programmanweisungen umfasst, die, wenn sie von einem Routinggerät ausgeführt werden, das Routinggerät dazu bringen, das Bandbreitenzuweisungsverfahren nach einem der Ansprüche 1 bis 7 zu implementieren.

13. Träger, der das Computerprogramm nach Anspruch 12 trägt.

## Revendications

1. Procédé d'allocation de largeur de bande, utilisant un algorithme de seau à jetons hiérarchique, HTB, le procédé comprenant :
la division (S302) d'une largeur de bande totale de liaison montante d'un routeur en une largeur de bande de classe parent de liaison montante et une largeur de bande réservée de liaison montante selon un premier rapport d'allocation prédéfini, et la division d'une largeur de bande totale de liaison descendante d'un routeur en une largeur de bande de classe parent de liaison descendante et une largeur de bande réservée de liaison descendante selon un second rapport d'allocation prédéfini ;
la surveillance (S304) d'un trafic de largeur de bande de chaque dispositif relié au routeur, dans lequel chaque dispositif correspond à une classe enfant et la classification d'un dispositif ayant un trafic de largeur de bande dépassant un seuil prédéfini comme un dispositif de première classe, et d'un dispositif ayant un trafic de largeur de bande ne dépassant pas le seuil prédéfini comme un dispositif de seconde classe, dans lequel le seuil prédéfini est une valeur de trafic minimum pour partager la largeur de bande de classe parent ; et
l'allocation (S306) des largeurs de bande de classe parent de liaison montante et de liaison descendante et des largeurs de bande réservées de liaison montante et de liaison descendante à des dispositifs de première classe et à des dispositifs de seconde classe respectivement selon le résultat de surveillance obtenu après la surveillance de trafic de largeur de bande de chaque dispositif ;
dans lequel l'allocation (S306) des largeurs de bande de classe parent de liaison montante et de liaison descendante et des largeurs de bande réservées de liaison montante et de liaison descendante aux dispositifs de première classe et aux dispositifs de seconde classe respectivement selon les résultats de surveillance comprend : l'allocation des largeurs de bande de classe parent de liaison montante et de liaison descendante aux dispositifs de première classe ; et l'allocation d'une largeur de bande restante aux dispositifs de seconde classe, dans lequel la largeur de bande restante est égale à une somme de la largeur de bande réservée de liaison montante, respectivement de la largeur de bande réservée de liaison descendante, et d'une valeur obtenue en soustrayant une largeur de bande utilisée par les dispositifs de première classe de la largeur de bande de classe parent de liaison montante, respectivement de la largeur de bande de classe parent de liaison descendante ;
dans lequel la largeur de bande de classe parent est définie comme la largeur de bande restante obtenue en soustrayant la largeur de bande réservée de la largeur de bande totale, et les classes enfants ayant préempté toute la largeur de bande restante dans la largeur de bande totale ne sont pas autorisées à emprunter la largeur de bande réservée.

2. Procédé selon la revendication 1, dans lequel une situation où le trafic de largeur de bande dépasse le seuil prédéfini comprend l'une des quatre situations suivantes :
un trafic de largeur de bande de liaison montante de chaque dispositif dépasse un seuil prédéfini de liaison montante ;
un trafic de largeur de bande de liaison descendante de chaque dispositif dépasse un seuil prédéfini de liaison descendante ;
un trafic de largeur de bande de liaison montante de chaque dispositif dépasse un seuil prédéfini de liaison montante, et un trafic de largeur de bande de liaison descendante de chaque dispositif dépasse un seuil prédéfini de liaison descendante ;
un trafic de largeur de bande de liaison montante de chaque dispositif dépasse un seuil prédéfini de liaison montante, ou un trafic de largeur de bande de liaison descendante de chaque dispositif dépasse un seuil prédéfini de liaison descendante.

3. Procédé selon la revendication 2, dans lequel le seuil prédéfini de liaison montante est inférieur à la largeur de bande réservée de liaison montante, et/ou le seuil prédéfini de liaison descendante est inférieur à la largeur de bande réservée de liaison descendante.

4. Procédé selon la revendication 1, dans lequel la largeur de bande de classe parent de liaison montante/liaison descendante est allouée (S306) aux dispositifs de première classe dans au moins l'un des modes suivants :
allocation moyenne, allocation dans une proportion prédéfinie, et allocation basée sur la priorité.

5. Procédé selon l'une quelconque des revendications 1 à 4, dans lequel tous les dispositifs ayant un trafic de largeur de bande dépassant le seuil prédéfini partagent la largeur de bande de classe parent de liaison montante/liaison descendante, et ne sont pas autorisés à réemprunter une largeur de bande autre que la largeur de bande de classe parent de liaison montante/liaison descendante dans la largeur de bande totale de liaison montante/liaison descendante.

6. Procédé selon l'une quelconque des revendications 1 à 4, dans lequel tous les dispositifs sont autorisés à préempter la largeur de bande totale de liaison montante/liaison descendante de manière sporadique pendant l'initialisation.

7. Procédé selon l'une quelconque des revendications 1 à 6, dans lequel la surveillance (S304) d'un trafic de largeur de bande de chaque dispositif relié au routeur comprend :
la surveillance (S304) d'un trafic de largeur de bande de chaque dispositif relié au routeur sur la base d'un temporisateur.

8. Appareil d'allocation de largeur de bande, utilisant un algorithme de seau à jetons hiérarchique, HTB, l'appareil comprenant :
un module de division de largeur de bande (10), agencé pour diviser une largeur de bande totale de liaison montante d'un routeur en une largeur de bande de classe parent de liaison montante et une largeur de bande réservée de liaison montante selon un premier rapport d'allocation prédéfini et une largeur de bande totale de liaison descendante d'un routeur en une largeur de bande de classe parent de liaison descendante et une largeur de bande réservée de liaison descendante selon un second rapport d'allocation prédéfini ;
un module de surveillance de trafic (20), agencé pour surveiller un trafic de largeur de bande de chaque dispositif relié au routeur, dans lequel chaque dispositif correspond à une classe enfant et pour classifier un dispositif ayant un trafic de largeur de bande dépassant un seuil prédéfini comme un dispositif de première classe, et un dispositif ayant un trafic de largeur de bande ne dépassant pas le seuil prédéfini comme un dispositif de seconde classe, dans lequel le seuil prédéfini est une valeur de trafic minimum pour partager la largeur de bande de classe parent ; et
un module d'allocation de largeur de bande (30), agencé pour allouer les largeurs de bande de classe parent de liaison montante et de liaison descendante et les largeurs de bande réservées de liaison montante et de liaison descendante à des dispositifs de première classe et à des dispositifs de seconde classe respectivement selon le résultat de surveillance obtenu après la surveillance de trafic de largeur de bande de chaque dispositif ;
dans lequel le module d'allocation de largeur de bande (30) comprend : une première unité d'allocation, agencée pour allouer les largeurs de bande de classe parent de liaison montante et de liaison descendante aux dispositifs de première classe ; et une seconde unité d'allocation, agencée pour allouer une largeur de bande restante aux dispositifs de seconde classe, dans lequel la largeur de bande restante est égale à une somme de la largeur de bande réservée de liaison montante, respectivement de la largeur de bande réservée de liaison descendante et d'une valeur obtenue en soustrayant une largeur de bande utilisée par les dispositifs de première classe de la largeur de bande de classe parent de liaison montante, respectivement de la largeur de bande de classe parent de liaison descendante ;
dans lequel la largeur de bande de classe parent est définie comme la largeur de bande restante obtenue en soustrayant la largeur de bande réservée de la largeur de bande totale, et les classes enfants ayant préempté toute la largeur de bande restante dans la largeur de bande totale ne sont pas autorisées à emprunter la largeur de bande réservée.

9. Appareil selon la revendication 8, dans lequel une situation où le trafic de largeur de bande dépasse le seuil prédéfini comprend l'une des quatre situations suivantes :
un trafic de largeur de bande de liaison montante de chaque dispositif dépasse un seuil prédéfini de liaison montante ;
un trafic de largeur de bande de liaison descendante de chaque dispositif dépasse un seuil prédéfini de liaison descendante ;
un trafic de largeur de bande de liaison montante de chaque dispositif dépasse un seuil prédéfini de liaison montante, et un trafic de largeur de bande de liaison descendante de chaque dispositif dépasse un seuil prédéfini de liaison descendante ;
un trafic de largeur de bande de liaison montante de chaque dispositif dépasse un seuil prédéfini de liaison montante, ou un trafic de largeur de bande de liaison descendante de chaque dispositif dépasse un seuil prédéfini de liaison descendante.

10. Appareil selon la revendication 9, dans lequel le seuil prédéfini de liaison montante est inférieur à la largeur de bande réservée de liaison montante, et/ou le seuil prédéfini de liaison descendante est inférieur à la largeur de bande réservée de liaison descendante.

11. Appareil selon la revendication 8, dans lequel le module d'allocation de largeur de bande (30) est agencé pour allouer la largeur de bande de classe parent de liaison montante/liaison descendante aux dispositifs de première classe dans au moins l'un des modes suivants : allocation moyenne, allocation dans une proportion prédéfinie, et allocation basée sur la priorité.

12. Programme informatique, comprenant des instructions de programme qui, lorsqu'elles sont exécutées par un dispositif de routage, amènent le dispositif de routage à mettre en œuvre le procédé d'allocation de largeur de bande selon l'une quelconque des revendications 1 à 7.

13. Porteur, portant le programme informatique selon la revendication 12.
